Europäisches Patentamt

European Patent Office

Office européen des brevets

(11) Publication number: **0 084 791**
A1

# EUROPEAN PATENT APPLICATION

(21) Application number: 83100140.9

(22) Date of filing: 10.01.83

(51) Int. Cl.³: **A 62 B 35/02, B 60 R 21/10**

(30) Priority: 13.01.82 JP 2868/82

(43) Date of publication of application: 03.08.83
Bulletin 83/31

(84) Designated Contracting States: DE FR GB

(71) Applicant: **NISSAN MOTOR COMPANY, LIMITED, No.2, Takara-cho, Kanagawa-ku, Yokohama City (JP)**

(72) Inventor: **Miki, Hiroyuki, 4-11-29, Kamitsuruma, Sagamihara City (JP)**

(74) Representative: **Patentanwälte TER MEER - MÜLLER - STEINMEISTER, Triftstrasse 4, D-8000 München 22 (DE)**

(54) **A seat belt retractor with a belt locking function disabling means.**

(57) In a system comprising a seat belt retractor (22) connected to a vehicle seat to move therewith and locking the belt (12) when a certain shock is applied thereto, and a seat sliding device (14) for sliding the seat relative to the vehicle floor and having a seat locking device (25) which locks the seat position when an operating handle (26) is in a locking position, there is arranged belt locking function disabling means (27, 48) which disables the belt locking function of the retractor (22), when the operating handle (26) is in an unlocking position other than the locking position.

- 1 -

0084791

## DESCRIPTION

The present invention relates to an emergency locking type seat belt retractor for a motor vehicle, and more particularly to a type wherein the retractor disables the belt locking function under certain conditions, such as seat position adjustment.

Hitherto, various seat belt retractors have been proposed for the safety of the vehicle passengers. Among those retractors, a so-called "emergency locking type" retractor is widely used for its conveniency, which can block the feeding of the belt therefrom when a certain shock is applied thereto due to, for example, a vehicle collision.

However, in the case that such type retractor is mounted to a slidable seat assembly to be movable therewith, and at least one end of the belt is fixed to the vehicle body other than the slidable seat assembly, a drawbacks is encountered in that, upon position adjustment of the seat particularly a forward change, due to a certain shock caused by the movement of the seat, the

- 2 -

0084791

shock sensor of the retractor operates and locks the belt. Under these conditions, the occupant wearing the belt is restrained in a manner which is both uncomfortable and which prevents the ready adjustment of the seat position and whereby the occupant is compelled to move forward against the increasing tension applied to him or her by the belt.

Therefore, it is an essential object of the present invention to provide a measure which can solve the above-mentioned drawbacks.

According to the present invention, there is provided a system associated with an automotive seat, which comprises a seat belt retractor connected to the seat to move therewith, the retractor having belt locking means which locks the belt when a certain shock is applied thereto, a seat sliding device for sliding the seat relative to the vehicle floor, the seat sliding device having seat locking means which locks the seat position when an operating handle is in a locking position, and belt locking function disabling means which disables the belt locking function of the belt retractor when the operating handle is in an unlocking position other than the locking position.

Other objects and advantages of the present invention will become clear from the following description when taken in conjunction with the accompanying drawings, in which:

Fig. 1 is a perspective view of an automotive slidable seat equipped with a seat belt;

Fig. 2 is a perspective view of a seat frame mounted on a seat sliding device, showing an emergency locking type seat belt retractor and a seat sliding device operating handle which constitute part of a system of the present invention; and

Figs. 3, 4 and 5 are plan, front and side views of the system of the invention, respectively.

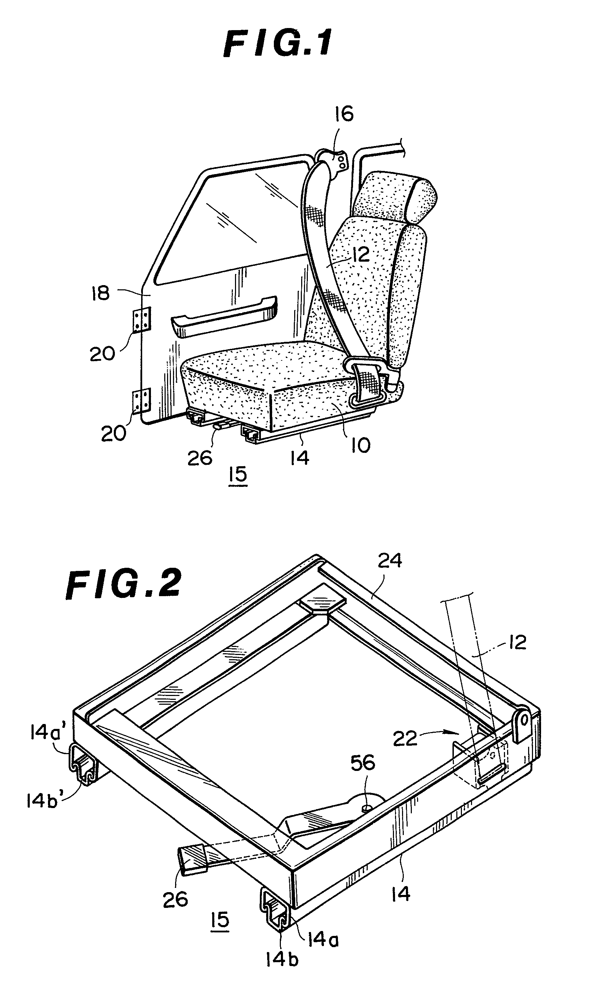

Referring to Fig. 1, there is shown a motor vehicle slidable seat 10 equipped with a seat belt 12 to which a system of the present invention is practically applied. The seat 10 is mounted on a seat sliding device 14 and thus movable in fore-and-aft directions relative to the vehicle floor 15. An upper end of the belt 12 is connected through an anchor plate 16 to an upper portion of the vehicle door 18 which is pivotable about hinges 20. As will become apparent as the description proceeds, the system of the invention is mounted under the seat 10 and disables, upon position adjustment of the seat 10, the belt locking function of an emergency locking type belt retractor in the system, so that the feeding and/or retracting of the seat belt 12 by the retractor is assured as the seat 10 slides. Fig. 2 shows schematically an arrangement of the system of the invention, which generally comprises an emergency locking type seat belt retractor 22 mounted to a seat frame 24 of the seat 10, an operating handle 26 of a seat locking device 25 (not shown in Fig. 2), and a motion transmission device 27 (not shown in Fig. 2) between the retractor 22 and the operating handle 26. The seat sliding device 14 hereinshown comprises two parallel upper rails 14a and 14a' fixed to the seat frame 14, and two parallel lower rails 14b and 14b' secured to the vehicle floor 15, the upper rails being slidable on and along the lower rails. The operating handle 26 of the seat locking device 25 is supported by the upper rail 14. Thus, the belt retractor 22, the operating handle 26 and the seat frame 24 move together as the seat 10 moves.

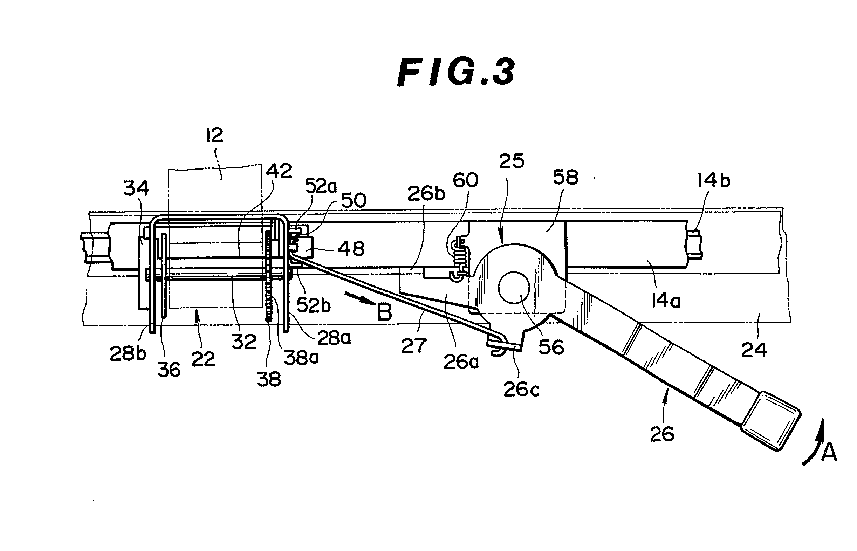

Referring to Figs. 3 to 5, there is shown the system of the present invention, which, as is mentioned hereinabove, comprises generally three sections, which are an emergency locking type seat belt retractor 22, an operating handle 26 of the seat locking device 25 and a motion transmission device 27.

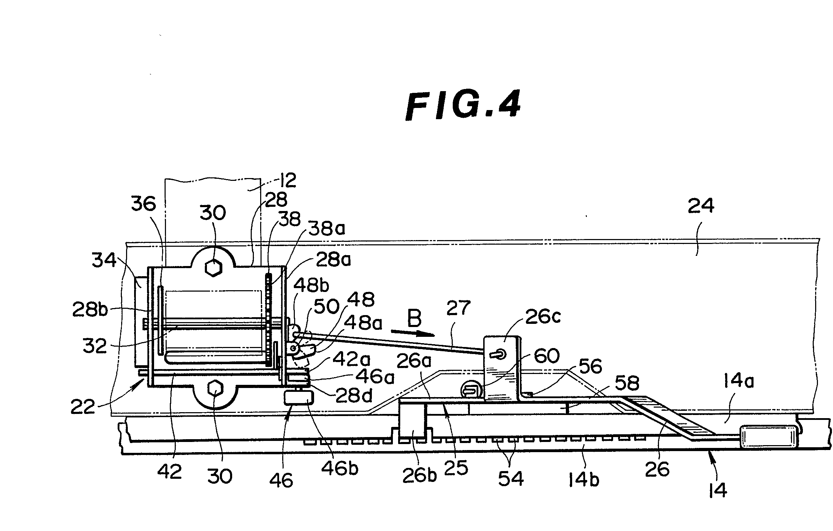

The emergency locking type seat belt retractor 22 comprises a generally U-shaped housing 28 having spaced side walls 28a and 28b, which is connected at its base section (no numeral) to the inboard side of the seat frame 24 by means of bolts 30 (see Fig. 4). A shaft 32 is rotatably supported by the housing side walls 28a and 28b and grips one end of the seat belt 12. A spiral spring 34 is mounted on the side wall 28b with its inner end connected to the shaft 32 and its outer end fixed to the side wall 28b, so that the shaft 32 is biased to rotate in a direction to wind thereon the seat belt 12. A circular plate 36 is coaxially and securedly mounted on the shaft 32 and acts as a belt guide. The retractor 22 has further therein a belt locking mechanism which locks the belt 12 when sensing a certain shock applied thereto.

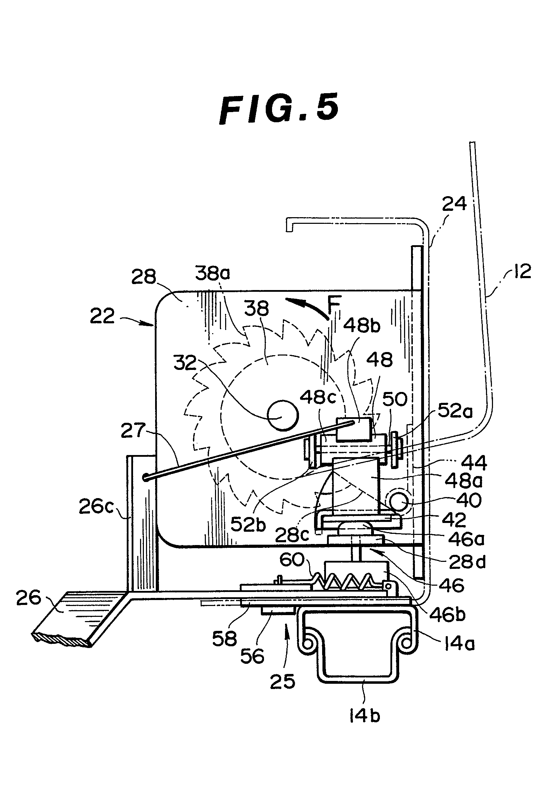

The belt locking mechanism comprises a ratchet wheel 38 which is coaxially mounted on the belt retracting shaft 32 to be rotatable therewith. A shaft 40 (see Fig. 5) is rotatably supported by the housing 28, which extends in parallel with the belt retracting shaft 32. A rectangular stopper plate 42 is secured at its one longer side to the shaft 40 to be pivotable about the axis of the shaft 40. The plate 42 has an extension 42a which passes through a triangular opening 28c (see Fig. 5) formed in the housing side wall 28a. The stopper plate 42 is swingable from its inoperative position as indicated by the solid line in Fig. 5 to its operative position where its free end is engaged with one of the teeth 38a of the ratchet wheel 38 thereby to block rotation of the ratchet wheel 38 and thus the rotation of the belt retracting shaft 32 in the direction of the arrow F (that is, in the direction to stop feeding of the belt 12 from the retractor 22). The stopper plate 42 is biased toward its inoperative position by a torsion spring 44 which is mounted at its turn portion on the shaft 40, having its opposed leg portions attached to the base section of the housing 28 and the stopper plate 42, respectively. One leg portion of the spring 44, which engages with the stopper plate 42, has a bent end (no numeral) for assuring the connection with the plate 42. Engageable with the stopper plate extension 42a from the lower side is a head portion 46a of a pendulum member 46. The pendulum member 46 is swingably supported at the head portion 46a from a shelf portion 28d of the housing 28, the shelf portion 28d being projected outward from the side wall 28a, as is seen from Fig. 4. The pendulum member 46 has a weight 46b at its lower section. Under normal condition, the pendulum member 46 is in its rest position as shown in Fig. 5. Thus, the stopper plate 42 is kept in its inoperative position, inducing free rotation of the belt retracting shaft 32 in both directions.

The belt retractor 22 is further provided with a belt locking function disabling means which blocks the locking operation of the stopper plate 42 under the after-mentioned predetermined condition. The means comprises a generally L-shaped cam member 48 which is pivotally mounted at its enlarged middle portion on a pin 50 which extends perpendicular to the belt retracting shaft 32 (that is, to the shaft 40 of the stopper plate 42). The pin 50 is supported by spaced brackets 52a and 52b secured to the housing side wall 28a. As is understood from Fig. 4, when the cam member 48 is in a predetermined angular position as indicated by the phantom line, the lower arm 48a of the cam member 48 engages the stopper plate extension 42a to suppress raising of the stopper plate 42. However, usually, the cam member 48 is in an inoperative position indicated by a solid line, as will become clear hereinafter.

The seat locking device 25 which is controlled by the operating handle 26 comprises a plurality of aligned openings 54 (see Fig. 4) which are formed in the inside wall section of the lower rail 14b of the seat sliding device 14. As is best seen from Fig. 4, the operating handle 26 is pivotally connected through a pivot pin 56 to a bracket 58 secured to the upper rail 14a, so that the handle 26 is movable generally horizontally about the pin 56. The handle 26 has an extension 26a of which leading end is bent downward to form a pawl member 26b. The pawl member 26b is engaged with one or two of the openings 54 of the lower rail 14b when the operating handle 26 assumes a predetermined position as illustrated in the drawings. Under this condition, the upper rail 14a is locked thereby locking the seat 10 at a given position. A spring 60 is arranged between the extension 26a of the handle 26 and the bracket 58 to bias the handle 26 in a direction to achieve the latching connection between the pawl member 26b and the openings 54 of the lower rail 14b. Thus, it will be appreciated that the position adjustment of the seat 10 is achieved by rotating the handle 26 in the direction of the arrow A (see Fig. 3) against the force of the spring 60 and then pushing or pulling the seat 10 with the handle 26 being pushed in that direction.

The motion transmission device 27 transmits the motion of the handle 26 to the afore-mentioned cam member 48 of the shock sensing function disabling means. The device 27 is a bar or rod which has one end pivotally connected to the upper arm 48b of the cam member 48 and the other end pivotally connected to an upward extension 26c of the operating handle 26. The arrangement is so that when the handle 26 is in the seat locking position for achieving the seat adjustment, the lower arm 48a of the cam member 48 is disengaged from the stopper plate extension 42a, while, when the handle 26 is turned to the seat releasing position, the lower arm 48a of the cam member 48 is brought into engagement with the extension 42a to suppress raising of the stopper plate 42.

In the following, operation of the above-stated system of the invention will be described. For facilitation, the description will commence with respect to a condition as shown by Figs. 3 to 5 wherein the operating handle 26 of the seat locking device 25 is in the seat locking position, and the pendulum member 46 is in its rest or inoperative position. Under this condition, the stopper plate 42 is kept in its inoperative position by the action of the torsion spring 44, so that the seat belt 12 can be freely fed or retracted by the retractor 22.

When a certain shock is applied to the retractor 22 due to, for example, a vehicle collision, the pendulum member 46 is forced to incline causing the head portion 46a thereof to raise the stopper plate 42 against the force of the torsion spring 44. Thus, in this case, the stopper plate 42 is brought into engagement with the ratchet wheel 38 and thus blocks rotation of the belt retracting shaft 32. With this operation, the belt wearer on the seat 10 is safely protected.

When, now, the belt wearer on the seat 10 wishes to change the seat position under the normal condition as shown by Figs. 3 to 5, he or she turns the operating handle 26 of the seat locking device 25 in the direction of the arrow A (see Fig. 3). With this operation, the handle 26 pulls the bar 27 in the direction of the arrow B (see Fig. 3 or Fig. 4) causing the L-shaped cam member 48 to assume the stopper plate blocking position as indicated by the phantom line in Fig. 4. Since the operating handle 26 is kept pushed toward the direction of the arrow A (see Fig. 3) until a new seat position is provided, the stopper plate 42 does not operate during the movement of the seat 10. Thus, the seat belt 12 is freely fed or retracted by the retractor 12 in response to the movement of the seat 10. Thus, the afore-mentioned drawbacks encountered in the conventioned system are solved.

0084791

## CLAIMS

1. A system associated with an automotive seat (10), comprising:

a selt belt retractor (22) connected to said seat to move therewith, said retractor having belt locking means (38,42,46) which locks the belt when a certain shock is applied thereto, and

a seat sliding device (14) for sliding said seat relative to the vehicle floor (15), said seat sliding device having seat locking means which locks the seat position when an operating handle (26) is in a locking position, c h a r a c t e r i z e d  by

belt locking function disabling means (27,48) which disables the belt locking function of the belt retractor (22) when said operating handle ·(26) is in an unlocking position other than said locking position.

2. A system as claimed in claim 1, c h a r a c t e r i z e d in that a free end (16) of the belt (12) is connected to a vehicle body portion other than the portion which is movable with the seat (10).

3. A system as claimed in claim 1 or 2, c h a r a c t e- r i z e d  in  that said belt locking function disabling means comprises:

a cam member (48) pivotally connected to said seat belt retractor (22) and blocking the operation of the belt locking means when assuming a predetermined angular position; and

a motion transmission bar (27) which transmits the
motion of said operating handle (26) to said cam member
(48) so that when said operating handle assumes said
unlocking position, said cam member assumes said predetermined angular position.

4. A system as claimed in claim 3, c h a r a c t e -
r i z e d  in that said cam member (48) is constructed
of a generally L-shaped lever which is pivotally connected
at its middle portion to the seat belt retractor (22),
having one arm (48a) thereof engageable with said belt
locking means and the other arm (48b) connected to said
motion transmission bar (27).

5. A system as claimed in any of the claims 2 to 4,
c h a r a c t e r i z e d  in that said belt locking means
comprises a ratchet wheel (38) securely mounted on a belt
retracting shaft (32) to rotate therewith, a stopper plate
(42) which engages with said ratchet wheel to lock the
same and thus said belt retracting shaft (32) when assuming
a locking position, biasing means (44) for biasing said
stopper plate (42) away from said locking position, and
a pendulum member (46) which, upon receiving a certain
shock, inclines to move said stopper plate against the biasing means to said locking position.

6. A system as claimed in claim 5, c h a r a c t e -
r i z e d  in that said seat sliding device comprises a
lower rail (14b) secured to the vehicle floor, an upper
rail (14a) slidable on said lower rail and supporting thereon
the seat proper, and that said seat locking means comprises
a plurality of openings (54) formed in said lower rail (14b),
a pawl portion (26b) provided on said operating handle (26)
which is pivotally connected to said upper rail (14a), and
biasing means (60) for biasing said operating handle (27) in a direction to cause said pawl portion (26b) to engage with said openings of the lower rail.

# FIG.1

# FIG.2

FIG.3

FIG.4

# FIG.5

European Patent
Office

**EUROPEAN SEARCH REPORT**

0084791
Application number

EP 83 10 0140

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 658 747 (AUTOFLUG)<br>* Claims 1, 26, 34, 36, 37 *<br><br>--- | 1,3 | A 62 B 35/02<br>B 60 R 21/10 |
| A | DE-A-2 425 741 (VOLKSWAGENWERK)<br>* Figure *<br><br>----- | 2 | |

TECHNICAL FIELDS
SEARCHED (Int. Cl. 3)

A 62 B 35/00
B 60 N 1/00
B 60 R 21/00

The present search report has been drawn up for all claims

| Place of search<br>BERLIN | Date of completion of the search<br>07-04-1983 | Examiner<br>BECKER W D H |
|---|---|---|